# EUROPEAN PATENT APPLICATION

(11) **EP 1 503 236 A1**
(43) Date of publication of application: **02.02.2005**
(21) Application number: 03077395.6
(22) Date of filing: 30.07.2003
(51) Int. Cl.: G02F 1/035

(54) **Electro-optical modulator**

(71) Applicant: Corning O.T.I. SRL, 20097 San Donato Milanese, Milano (IT)
(72) Inventor: Pruneri, Valerio, 20127 Milano (IT); Orio, Massimo, 20081 Abbiategrasso Milano (IT)
(74) Representative: Poole, Michael John

(57) **Abstract**

An electro-optical modulator to be used at frequencies up to a maximum in the microwave range comprises:
a body electro-optic material;
at least one optical waveguide formed in the electro-optic material;
and electrodes defining a microwave waveguide at least partly coincident with a said optical waveguide
The electro-optic material is in alternate zones of opposite poling along the length of the waveguides and there are many such zones with differing lengths small compared with the coherence length of the signal at that maximum frequency. The alternating short zones approximate to zones with a fractional poling function and by varying the relative lengths of the zones of opposite polarity an approximation to an ideal polarization curve for a predetermined electro-optic response can be achieved.

## Description

This invention relates to electro-optical modulators for use in optical communications and potentially in optical data processing.

Electro-optical modulators exploit "electro-active" materials whose refractive index (in one or more direction and/or for one or more optical polarisation direction) varies with an applied electrical field to modulate an incoming electrical signal, usually at a frequency in the microwave region, on to an optical carrier. Usually the signals will be digital signals, but modulation of analogue signals is also possible. Either intensity modulation or phase modulation can be achieved, depending on the design of the device, and intensity modulators can be used also as switches. The most frequently used electro-active material is lithium niobate, but lithium tantalate, some semiconductors and "poled" polymers and glasses can be used.

The maximum change in refractive index of electro-active materials is relatively small, and so if a sufficient depth of modulation is to be achieved, a substantial optical path length (of the order of a centimetre) is needed, and since this is of the same order as the wavelength of the electrical signal, this normally requires a travelling wave regime in which the electrical signal travels in the same direction as the optical signal. However, this is only partially effective, because the refractive index of electro-active materials differs considerably (in some cases by a factor larger than 2) between optical and microwave frequencies, so that the signals travel at correspondingly different phase velocities and are liable to "walk off' in which the direction of modulation reverses along the length of the modulator because the microwave signal has changed phase. This effect can be countered either by using electrode structures that reduce the effective velocity of the electrical signal, by establishing a transmission mode that is partly in the electro-active material and partly in the air and/or by introducing discrete delays, or else by inverting the poling (or domain direction - for simplicity the term "poling" will be used in this application) of the electro-active material (or the direction of the electrical field). At present two ways of implementing inversion of poling are established. In the first, the inversions are periodic (equally spaced) and so can always correspond with poling reversal at some particular frequency, resulting in an electro-optic response that is predictable and useful, corresponding to a sinc² curve but with limited bandwidth, especially at high design frequencies (with correspondingly frequent reversals). In the second, the reversals are "aperiodic" but usually in groups in each of which the zone lengths are all approximately equal to the coherence lengths at respective frequencies within a predetermined bandwidth, which allows a greater bandwidth to be achieved but at the expense of much greater difficulty in designing the device to achieve a desired, or even an acceptable, electro-optic response. Thus there remains a need to provide an electro-optical modulator in which frequency response can be adjusted, within limits, and if possible the usable bandwidth of the device increased.

In accordance with one aspect of the present invention, an electro-optical modulator for service at frequencies up to a maximum in the microwave range comprises: a body of optically active material; at least one optical waveguide formed in the optically active material; and electrodes defining a microwave waveguide at least partly coincident with a said optical waveguide, the optically active material being in alternate zones of opposite poling along the length of the waveguides and is characterised in that there are many such zones with lengths small compared with the coherence length of the signal up to that maximum frequency and differing between the zones.

Our present preference is that all, or nearly all, of the zones have lengths small compared with that coherence length. Preferably all, or nearly all, the zones have lengths substantially less than one fifth of that coherence length; more especially, we recommend lengths in the range from about one twelfth to about one sixth of that coherence length, and almost always less than 1 mm. (for example, if the modulator is intended to operate at a frequency of 40GHz, the coherence length is 3.75mm (if both microwaves and optical waves travel in lithium niobate) and a good length for each zone could be a few hundreds of micrometres (e.g. 300-600 µm). It follows that there will seldom be less than 20 zones, usually at least 40, and possibly 100 or more.

By using alternate short zones of opposite domain direction and appropriately differing lengths, it becomes possible to obtain an effect similar to that which might be attributed to an imagined zone with a fractional poling, and so to effect relatively smooth changes in effective electro-optical coefficient along the length of the device, rather than abrupt reversals.

It will be apparent that the appropriate lengths (and more especially the ratio of the lengths of the zones of opposite domain direction) need to be chosen appropriately to achieve a desired result. This is an entirely practicable operation requiring only modest amounts of calculation, provided that microwave losses are not too large to be neglected. It is known that the electro-optic response is related to a function defining poling reversal positions along the length of the modulator (i.e. the function which has the value +1 for one direction of the polarization and -1 for the other) by a Fourier Transform. It follows that if a desired frequency response is defined and an inverse Fourier transform applied, then the real part, normalized to 1 in modulus, corresponds to the desired poling function. This will, at all or most points, give a fractional poling value, but as already explained this can be effectively approximated by a group of short zones of alternating domain direction with lengths in the appropriate ratio (duty-cycle modulation). For example, a group of short zones with a ratio of lengths 3⁺¹ :7⁻¹ would have the effect of a poling function with a value 0.3-0.7 = -0.4; 8⁺¹:2⁻¹ with a value of +0.6; equal lengths with a value 0, and so on. In other words, the desired value of the poling function (any number between -1 and +1) is given by the local mean value of the square wave made up of those short zones and this is the case because of the shortness of those zones compared to the coherence length.

In some cases, such calculations may lead to an ideal poling function with a value close to zero for a substantial part of its length (typically either in the "head" or more especially in the "tail" of the function, corresponding to the input and output ends of the modulator, respectively), which would imply a need for a high driving voltage because that part of the length would not make a substantial contribution to the modulation depth. The practical solution in such cases is to elongate and truncate the ideal function to the extent that results in an acceptable compromise between fitting to the desired response curve and drive voltage. Note that such elongation requires corresponding adjustment to the microwave waveguide(s) to obtain an appropriate difference (Δn) between the microwave and optical refractive indexes and thus an appropriate relationship between the active length of the device and the coherence length. In fact, the inverse Fourier Transform of the desired electro-optic response must be appropriately scaled according to the Δn to be achieved. It means that for a poling function of fixed length, varying Δn changes the electro-optic response; conversely, it is possible to maintain a desired electro-optic response, even stretching the poling function if desired, provided that Δn changes in an appropriate way (namely so that Δn × L = constant, where L is the length of the modulator) . Thus parts of the poling function with a value close to zero can be eliminated: so the modulator will shorten - in some cases too much to obtain a satisfactory modulation depth, in which case it should be elongated and Δn is appropriately adjusted (reduced). In some cases truncation may be essential because the ideal curve would require an impossible value for Δn.

To summarise the recommended procedure for implementing the invention:
1. a desired electro-optic frequency response is defined;
2. by an Inverse Fourier transform, a spatial poling function is obtained, then normalized to 1 in modulus;
3. if there are long zones at the extremes where this function is close to zero, they can be suppressed since they don't contribute substantially to the modulation (the electro-optic coefficient is near zero); however, it should be kept in mind (see figures) that to a greater truncation corresponds a more pronounced distortion in the frequency domain;
4. the length of the modulator can be varied by stretching the poling function, but to obtain always the same electro-optic response, Δn should change, by changing the transverse configuration of the waveguides (for examples by increasing or decreasing the thickness of the buffer layer or the width of the electrodes). If the product Δn × L remains constant, the electro-optic response will not vary significantly. This is strictly true if microwave losses are negligible, otherwise some adjustment may be needed.
5. Once Δn and L have been fixed (which means that a good compromise between modulator length, driving voltage and transverse structure has been reached), depending upon the maximum frequency for which the modulator is designed, the above approximation, effectively using a square-wave of a period smaller than the coherence length (calculated at such frequency and with the Δn used) and a variable duty-cycle can be carried out.

Even if microwave losses are not negligible, such calculations provide a starting point for empirical adjustments or iterative calculations.

In one important type of modulator, there are two waveguides connected logically (and usually arranged physically) in parallel, with one or two microwave waveguide(s) arranged to unbalance the resulting Mach-Zehnder interferometer so as to obtain constructive or destructive interference where they recombine, according to the incoming microwave signal. Specific modulators referred to herein are of this type unless otherwise indicated. The invention may also be applied, for example, to a phase modulator having only one optical waveguide and one microwave strip.

Because of the small lengths of individual zones, and the large number of zone lengths that can be chosen independently of one another and closely defined compared with the zones defined by electrode, or rather by the electrical fields that they generate, it is possible to achieve closer approximation to a desired response curve than with known designs; electrode designs can be simple, straight and uniform and so avoid reflections and other sources of loss. In appropriate cases, the phase modulation can be chosen independently of intensity modulation characteristics (chirp control).

The invention will be further described, by way of example, with reference to the accompanying drawings in which:
Figure 1 is a graph showing as an example of a desirable modulator frequency response a 3rd-order Bessel function;
Figure 2 is a graph showing the ideal poling function for such a modulator, being the inverse Fourier transform of Figure 1, together with several practical trade-off approximations to it, obtained by elongating the former to eliminate the part close to zero;
Figure 3 is a graph similar to Figure 1 showing the computed frequency response for each of the poling functions of Figure 2 (that is their Fourier transforms);
Figure 4 is an enlarged section of a graph (corresponding to a portion of one of the curves in Figure 3) modified to illustrate the effect of microwave losses; and
Figure 5 is a diagrammatic representation of a modulator in accordance with the invention applying one of the poling functions shown in Figure 2; and
Figures 6 and 7 are enlarged details of the modulator of Figure 5.

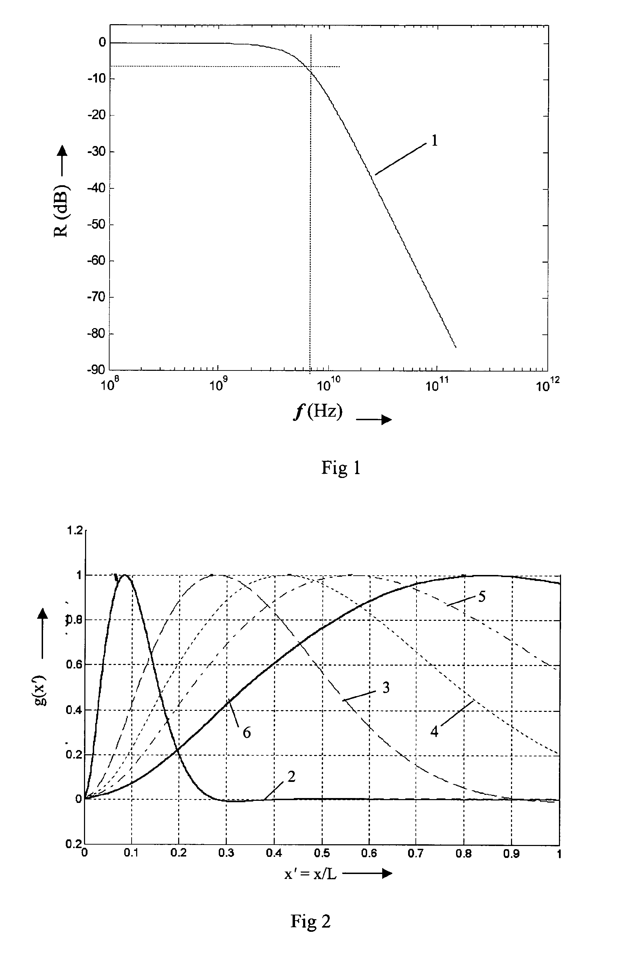

As seen in Figure 1, the desired frequency response to be obtained in this example is a 3rd order Bessel function 1 in which the response falls to -6dB at a frequency of 6GHz. This is desirable for a number of applications including modulation to duobinary formats and more generally when an electrical radio frequency filter of the signal would be desirable or needed to transmit the optical signal in the appropriate form; the invention makes it possible to achieve the same result without a radio frequency filter, so the system is simplified.

Inverse Fourier transformation of this function yields the ideal poling function curve 2 plotted in Figure 2 against distance along the length of the modulator, expressed as x', the ratio of the distance (x) from the input end of the modulator to the active length of the modulator (L). The attraction of this ideal function is clearly limited, since the poling function has a value substantially equal to zero for about 0.7 of the active length, which would mean that only about 0.3 of the length would contribute to the depth of modulation, and so would imply a high driving voltage requirement: we estimate it as 33V for a lithium niobate modulator 30 mm long with an overlap integral Γ = 0.5, operating in the usual push-pull mode with electrode gaps (d) of 25 µm at a wavelength λ = 1550 nm. To counter this difficulty, the inventors have considered the effect of modifying the poling function by elongation and truncation at various points as shown in curves 3-6: curve 3 retains in elongated form the whole of the "lobe" in which the value of the function is substantially greater than zero; curve 4, two thirds of it (by length), curve 5, half of it; and curve 6, only one third.

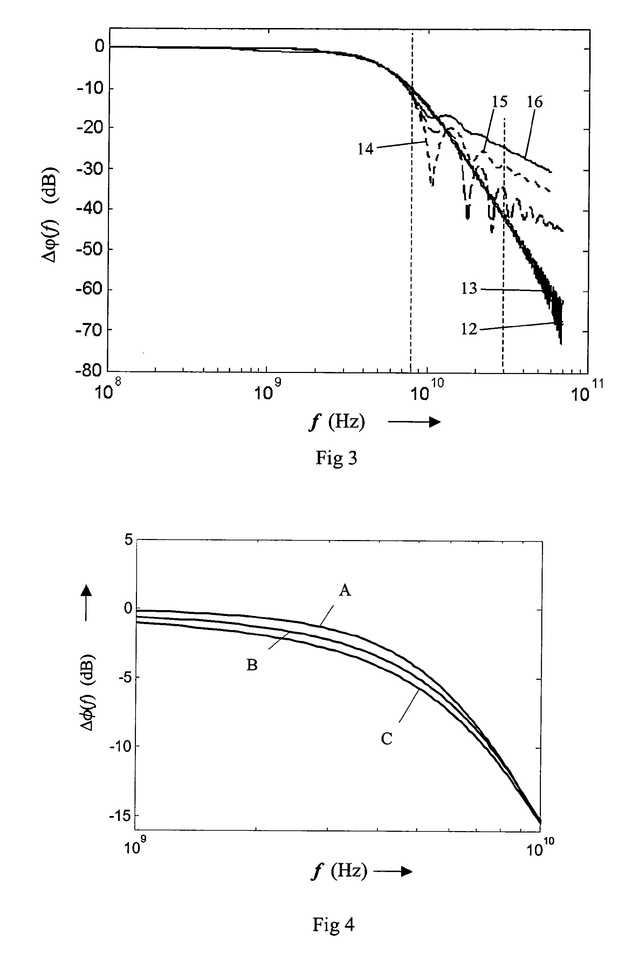

In figure 3, the curves 12-16 are the Fourier transforms of curves 2-6 respectively in Figure 2. Curve 12 is not clearly visible but, as would be expected, corresponds very closely to the target curve 1 of Figure 1, just developing a small oscillation above about 2×10¹⁰ Hz attributable to spatial limitations inherent in the calculations. Curve 13 is almost indistinguishable from it, except that its oscillations in the same range are a little larger and at a higher frequency. Curves 13-15 depart considerably from the target at the highest frequencies, but are all equally acceptable to about 8×10⁹ Hz. The required drive voltages (V_{π}) and refractive index differences (Δη) for lithium niobate modulators in accordance with these curves are as follows:

| Poling function | Fourier Transform | V_{π} (volt) | Δη |
|---|---|---|---|
| curve 2 | curve 12 | 33 | 5.86 (an impossible value) |
| curve 3 | curve 13 | 10 | 1.83 |
| curve 4 | curve 14 | 7 | 1.36 |
| curve 5 | curve 15 | 6.2 | 1.28 |
| curve 6 | curve 16 | 6.7 | 1.33 |

Provided that microwave losses are negligible, substantially the same response curve can be obtained with a given poling function for a range of effective lengths L, by correspondingly adjusting the refractive index difference Δη inversely such that the product L×Δη remains constant. As illustrated by Figure 4, the possibility of exploiting high values of L to achieve low drive voltages and reduce the need for large refractive index differences is limited, because losses soon cease to be negligible and the desired response curve is no longer achieved. In the figure, curve A is a portion of the response curve calculated for a loss-free modulator in accordance with the invention; curve B allows for microwave losses according to the expected formula α = 49√ƒ (in dB/m with ƒ expressed in GHz) for a modulator 30 mm long having Δη = 1.83 and having a drive voltage requirement of 10 V; curve C is for an otherwise identical modulator 60 mm long and with Δη = 0.9, and it will be seen that the response is significantly different over this range; the drive voltage requirement is found to be 5.2 V.

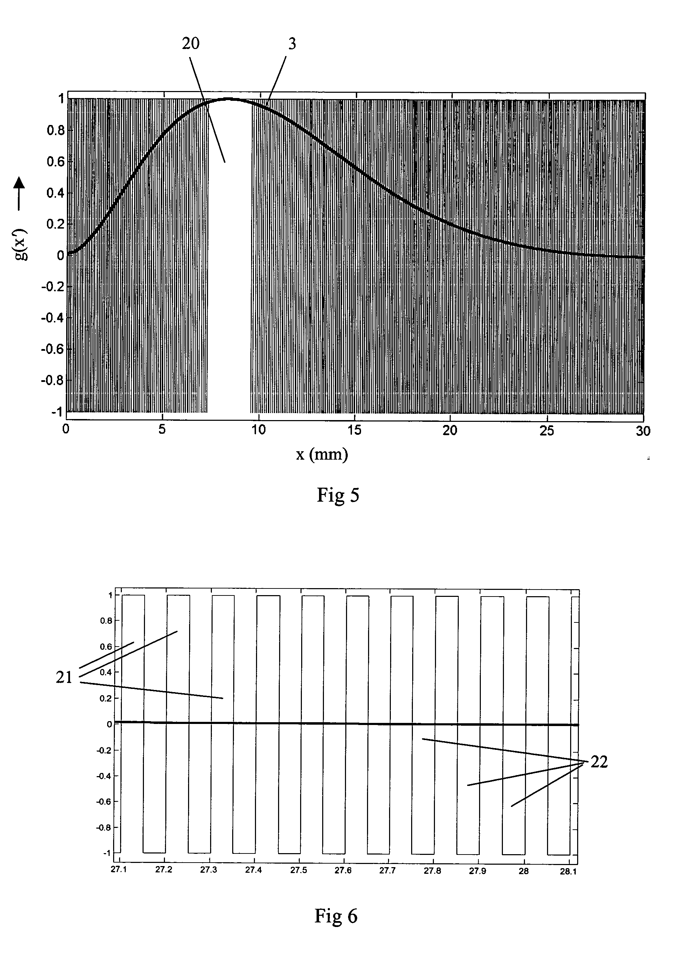

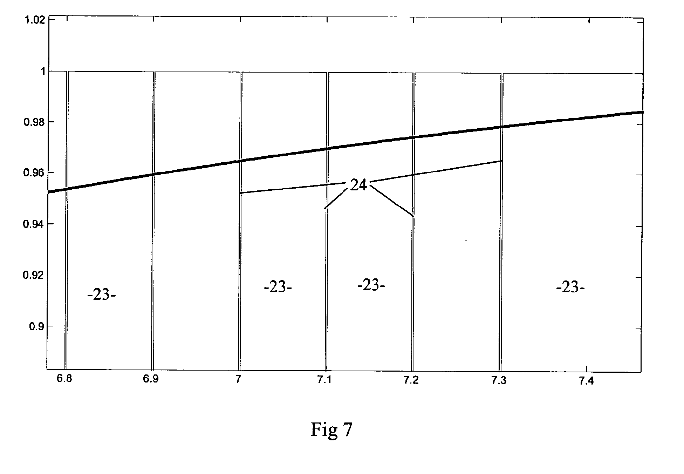

Figure 5 shows diagrammatically a practical form of modulator in accordance with the invention. Curve 3 of Figure 2 is here superimposed on a drawing of an alternately-poled layer structure calculated to approximate to it, by varying the relative thicknesses of alternate layers of + and - poling. A single thick zone 20 of + poling about 2 mm long is used where the curve calls for a poling value substantially equal to +1, alternate equal zones of + and - poling 21 and 22 respectively each 50 µm long where it calls for a value close to zero (as shown in Figure 6), and intermediate proportions with + layers 23 up to a maximum of about 100 µm and - layers 24 down to about 30 µm (Figure 7) where intermediate values are required. In other words, curve 2 of figure 2 is here approximated by a square wave of 100 µm period with a duty-cycle such as to obtain as mean value the local value of the original curve; the period of 100 µm was chosen on the basis that it was large enough for the required polarization reversals to be confidently and easily formed and yet much smaller than the coherence length.

Other electro-optical characteristics can be obtained by the same general procedure as described for the 3rd-order Bessel function. One particular characteristic that may be mentioned is an approximately square one which is found to require a sinc shaped poling function.

Any discussion of the background to the invention herein is included to explain the context of the invention. Where any document or information is referred to as "known ", it is admitted only that it was known to at least one member of the public somewhere prior to the date of this application. Unless the content of the reference otherwise clearly indicates, no admission is made that such knowledge was available to the public or to experts in the art to which the invention relates in any particular country (whether a member-state of the PCT or not), nor that it was known or disclosed before the invention was made or prior to any claimed date. Further, no admission is made that any document or information forms part of the common general knowledge of the art either on a world-wide basis or in any country and it is not believed that any of it does so.

## Claims

1. An electro-optical modulator for service at frequencies up to a maximum in the microwave range comprising:
a body of optically active material;
at least one optical waveguide formed in the optically active material;
and electrodes defining a microwave waveguide at least partly coincident with a said optical waveguide,
the optically active material being in alternate zones of opposite poling along the length of the waveguides
***characterised in that*** there are many such zones with lengths small compared with the coherence length of the signal at that maximum frequency and differing between the zones.

2. An electro-optical modulator in accordance with claim 1 in which all, or nearly all, of the zones have lengths small compared with that coherence length.

3. An electro-optical modulator in accordance with claim 1 in which all, or nearly all, the zones have lengths substantially less than one fifth of that coherence length.

4. An electro-optical modulator in accordance with claim 1 in which all, or nearly all, the zones have lengths in the range from about one twelfth to about one sixth of that coherence length.

5. An electro-optical modulator in accordance with any one of claims 1-4 in which there are not less than 20 zones.

6. An electro-optical modulator in accordance with any one of claims 1-4 in which there are, at least 40 zones.

7. An electro-optical modulator in accordance with any one of claims 1-4 in which there are at least 100 zones.

8. An electro-optic modulator in accordance with any one of claims 1-7 and of the kind comprising two waveguides connected logically in parallel, with one or two microwave waveguide(s) arranged to unbalance the resulting Mach-Zehnder interferometer so as to obtain constructive or destructive interference where they recombine, according to the incoming microwave signal.
